# EUROPÄISCHE PATENTSCHRIFT

(11) **EP 3 083 127 B1**
(45) Veröffentlichungstag und Bekanntmachung des Hinweises auf die Patenterteilung: **19.06.2019**
(21) Anmeldenummer: 14824393.4
(22) Anmeldetag: 12.12.2014
(51) Int. Cl.: B23K 26/38, B23K 26/08, B23K 37/02, B23K 37/04, B23K 10/00, B62D 7/20

(54) **MASCHINE ZUM TRENNENDEN BEARBEITEN VON PLATTENFÖRMIGEN WERKSTÜCKEN UND DESSEN VERWENDUNG**
MACHINE FOR THE SEPARATIVE MACHINING OF PLATE-SHAPED WORKPIECES AND THE USAGE THEREOF
MACHINE POUR SÉPARER PAR USINAGE DES PIÈCES EN FORME DE PLAQUES ET SON UTILISATION

(30) Priorität: 20.12.2013 DE 102013226816
(43) Veröffentlichungstag der Anmeldung: 26.10.2016
(73) Patentinhaber: Trumpf Werkzeugmaschinen GmbH + Co. KG, 71254 Ditzingen (DE)
(72) Erfinder: DEISS, Magnus, 70372 Stuttgart (DE); EPPERLEIN, Peter, 71229 Leonberg (DE); OCKENFUSS, Simon, 71034 Böblingen (DE); SCHMAUDER, Frank, 72555 Metzingen (DE); WOLF, Dennis, 71229 Leonberg (DE)
(74) Vertreter: Kohler Schmid Möbus Patentanwälte
(86) Internationale Anmeldenummer: PCT/EP2014/077531
(87) Internationale Veröffentlichungsnummer: WO 2015/091252

(56) Entgegenhaltungen:
- DE-A1-102011 051 170
- DE-C2- 3 917 253
- JP-A- S61 206 586
- JP-A- 2004 050 184

## Beschreibung

Die vorliegende Erfindung betrifft eine Maschine, insbesondere eine Laserbearbeitungsmaschine, zum trennenden Bearbeiten eines plattenförmigen Werkstücks mittels eines Bearbeitungsstrahls, insbesondere mittels eines Laserstrahls, mit: einer ersten Bewegungseinrichtung zur Bewegung des Werkstücks in einer ersten Richtung (X-Richtung), einer zweiten Bewegungseinrichtung zur Bewegung eines den Bearbeitungsstrahl auf das Werkstück ausrichtenden Bearbeitungskopfs in einer zweiten, zur ersten Richtung und zum Bearbeitungsstrahl senkrechten Richtung (Y-Richtung), sowie zwei Werkstückauflageflächen zur Auflage des Werkstücks, zwischen denen ein sich entlang der zweiten Richtung erstreckender insbesondere ortsfester Spalt gebildet ist. Der Oberbegriff des Anspruchs 1 basiert z.B. auf JP 2004050184A. Die Erfindung betrifft auch ein Verfahren zum trennenden Bearbeiten eines Werkstücks mittels einer solchen Maschine.

Eine solche Maschine zum trennenden Bearbeiten von plattenförmigen Werkstücken mittels eines Laserstrahls in Form einer kombinierten Laser- und Stanzmaschine ist aus der JP 5050346A bekannt geworden. An einer derartigen Maschine mit hybrider Bewegungsführung, bei der das Werkstück in einer ersten Richtung (X-Richtung) und der Bearbeitungskopf in einer zweiten Richtung (Y-Richtung) bewegt werden, ist zur Vermeidung von Beschädigungen durch den Bearbeitungsstrahl die Werkstückauflage im Verfahrbereich des Bearbeitungskopfs unterbrochen. In der Werkstückauflage erstreckt sich somit zwischen zwei Werkstückauflageflächen bzw. Werkstückauflagen ein Spalt in Y-Richtung. Durch diesen Spalt werden der durch das Werkstück hindurch getretene Bearbeitungsstrahl sowie anfallende Schlacke und Schneidbutzen abgeführt. Bei dem Bearbeitungsstrahl kann es sich um einen Laserstrahl handeln, aber auch die Verwendung eines Wasserstrahls oder einer anderen Art von Hochenergiestrahl, beispielsweise in Form eines Plasmalichtbogens, ist möglich.

Insbesondere für den Fall, dass eine solche Laserbearbeitungsmaschine eine Zusatzachse zur Bewegung des Bearbeitungskopfs in X-Richtung aufweist, ist es vorteilhaft, wenn der Spalt in der Werkstückauflage eine Mindestbreite aufweist, die zumindest dem Verfahrbereich des Bearbeitungskopfs in X-Richtung entspricht. Mittels der Zusatzachse kann der Bearbeitungskopf innerhalb des Spaltes mit hoher Dynamik verfahren werden. Ein breiter Spalt erlaubt außerdem ein freies Fallenlassen von kleinen bis mittelgroßen Schneidbutzen, Restgitterteilen oder kleineren Werkstückteilen, die beispielsweise mit Hilfe von Teilerutschen voneinander sowie von der Schlacke getrennt werden können. Auf diese Weise können Kleinteile deutlich schneller aus dem Schneidbereich entfernt werden als durch die Schwenkbewegung einer zu diesem Zweck vorgesehenen Ausschleusklappe.

Eine große Spaltbreite kann sich beim Freischneiden kleinerer Werkstückteile jedoch auch nachteilig auswirken, da kleine Werkstückteile im Spaltbereich nicht ausreichend unterstützt werden und aufgrund des hohen Gasdrucks des aus der Bearbeitungsdüse am Bearbeitungskopf austretenden und auf die freigeschnittenen Werkstückteile auftreffenden Schneidgases bzw. Wassers im Spalt verkippen und ggf. am Restwerkstück verhaken können.

Aus der JP2000246564 A2 ist eine Laser- und Stanzmaschine bekannt geworden, bei welcher das Werkstück in X-Richtung bewegt wird und ein Stanzstempel und eine Stanzmatrize gemeinsam in Y-Richtung bewegt werden. Zu diesem Zweck sind der Stanzstempel und die Stanzmatrize mechanisch über Hebelarme und Universalgelenke miteinander sowie mit einem gemeinsamen Antrieb gekoppelt.

In der JP2030332 A1 ist eine Maschine zum thermischen Schneiden und Stanzen von Werkstücken beschrieben, bei welcher ein Laserschneidkopf mittels zweier angetriebener Schlitten in X-Richtung und in Y-Richtung verfahren wird. Die Maschine weist einen in Y-Richtung synchron zum Laserschneidkopf verfahrbaren Werkstückaufnahmebehälter auf.

Aus der DE 39 17 253 C2 ist eine Vorrichtung zum Schneiden von geschichtetem Bandmaterial bekannt geworden, welche einen Rahmen und einen Haltegurt aufweist, der in Längsrichtung des Rahmens hin- und herbewegbar ist. In einem Beispiel weist die Vorrichtung einen Schneidkopf auf, der an einem in Längsrichtung des Rahmens hin- und herbewegbaren Laufbauteil so gehalten ist, dass er in Querrichtung hin- und herbewegbar ist. Die Vorrichtung weist ein unteres Aufnahmebauteil auf, das an dem Laufbauteil befestigt ist und einen nutförmigen Querschnitt aufweist. In dem Aufnahmebauteil sind mehrere miteinander verbundene Verschlussplatten aufgenommen, die in Querrichtung im Gleichlauf mit dem Schneidkopf hin- und herbewegbar sind. Zwischen den Verschlussplatten kann eine Schneidaufnahmehülse eingepasst sein, die eine Spitze der Schneideinrichtung abstützt. An Stelle des Schneidkopfs kann an dem Laufbauteil ein Düsenkopf zum Ausstoßen einer Höchstdruckflüssigkeit vorgesehen sein. In diesem Fall ist zwischen den Verschlussplatten eine Flüssigkeitsaufnahmehülse eingepasst.

### Aufgabe der Erfindung

Der vorliegenden Erfindung stellt sich die Aufgabe, eine Maschine der eingangs genannten Art zur trennenden Bearbeitung plattenförmiger Werkstücke, insbesondere eine Laserbearbeitungsmaschine, bereitzustellen, die eine an die Werkstückgröße, Werkstückkontur und/oder Werkstückdicke angepasste Unterstützung von Werkstückteilen während der trennenden Bearbeitung und insbesondere ein vereinfachtes Ausschleusen freigeschnittener Werkstückteile ermöglicht.

### Gegenstand der Erfindung

Diese Aufgabe wird gelöst durch eine Maschine der eingangs genannten Art, bei der innerhalb des Spalts mindestens ein in der zweiten Richtung (Y-Richtung) verfahrbarer Unterstützungsschlitten angeordnet ist, der eine Auflagefläche zur Unterstützung des Werkstücks bzw. von bei der trennenden Bearbeitung geschnittenen Werkstückteilen aufweist und der vorzugsweise unabhängig vom Bearbeitungskopf innerhalb des Spalts verfahrbar ist.

Im Verfahrbereich des Bearbeitungsstrahls befindet sich somit mindestens ein Unterstützungsschlitten, der in Y-Richtung innerhalb des Spalts gesteuert synchron zum Bearbeitungskopf oder auch unabhängig vom Bearbeitungskopf bewegt werden kann und der das Werkstück bzw. geschnittene Werkstückteile während der Bearbeitung und insbesondere während des Freischneidens unterstützen kann. Dieser verfahrbare Unterstützungsschlitten weist gegenüber den feststehenden Werkstückauflageflächen deutlich kleinere Abmessungen auf und kann daher dynamisch in dem Spalt zwischen den Werkstückauflageflächen bewegt werden. Für die unabhängige Bewegung des Unterstützungsschlittens und des Bearbeitungskopfs in dem Spalt werden typischer Weise unterschiedliche Antriebe verwendet, die es ermöglichen, den Unterstützungsschlitten und den Bearbeitungskopf unabhängig voneinander an unterschiedliche Positionen in Y-Richtung zu verfahren.

Unter einer Werkstückauflagefläche wird im Sinne dieser Anmeldung eine Werkstückauflage verstanden, die geeignet ist, das plattenförmige Werkstück flächig zu unterstützen. Eine solche Werkstückauflagefläche muss keine durchgehende Fläche bilden, es genügt vielmehr, wenn das Werkstück an mehreren (mindestens drei, in der Regel deutlich mehr) Stellen durch Auflageelemente (ggf. nur punktuell) unterstützt wird, um das Werkstück in einer Auflageebene zu lagern, d.h. die Werkstückauflagefläche wird in diesem Fall von den Oberseiten der Auflageelemente gebildet. Die Werkstückauflageflächen, zwischen denen der Spalt gebildet ist, können beispielsweise in Form eines Bürsten- oder Kugeltisches ausgebildet sein. Das zu bearbeitende Werkstück wird in diesem Fall während der Bearbeitung durch viele auf bzw. in einer Tischfläche angeordnete Auflageelemente in Form von Bürsten oder (drehbaren) Kugeln gestützt, die zusammen die Werkstückauflagefläche bilden. Alternativ können parallel zum Spalt angeordnete, drehbare Rollen, deren Drehachse sich parallel zum Spalt erstreckt, als Auflageelemente zur Bildung von Werkstückauflageflächen vorgesehen sein. Außerdem ist es möglich, die Werkstückauflageflächen als umlaufende Auflagebänder zu gestalten.

Entsprechend kann auch der Unterstützungsschlitten auf seiner dem Werkstück zugewandten Seite eine durchgehende Auflagefläche aufweisen, die zur Anlage an die Werkstückunterseite gebracht werden kann. Alternativ kann der Unterstützungsschlitten mehrere Auflageelemente z.B. in Form von Auflagespitzen (Pins), Kugeln oder Bürsten aufweisen, die gemeinsam die Auflagefläche bilden, auf der das Werkstück bzw. freigeschnittene Werkstückteile aufliegen können.

Bei der Bearbeitung auf der erfindungsgemäßen Maschine können große Werkstückteile bei ausreichender Biegesteifigkeit bzw. ausreichender Dicke des Werkstückmaterials ohne zusätzliche Unterstützung im Spalt geschnitten werden. In diesem Fall wird der Unterstützungsschlitten während der Bearbeitung mit Abstand zum Bearbeitungskopf positioniert, so dass der Unterstützungsschlitten die Bearbeitung nicht beeinflusst. Durch die Anordnung des Unterstützungsschlittens in einem ausreichenden Abstand zum Bearbeitungskopf kann eine Verschmutzung oder Beschädigung des Unterstützungsschlittens durch den Bearbeitungsstrahl vermieden werden. Beim Schneiden kleinerer, kippgefährdeter Werkstückteile, die nach dem Freischneiden nicht auf beiden Werkstückauflageflächen aufliegen und/oder keine ausreichende Biegesteifigkeit aufweisen, wird der Unterstützungsschlitten dagegen während der Bearbeitung oder zumindest für den Freischnitt mit der Auflagefläche unter dem Werkstückteil positioniert, um dieses flächig bzw. an mehreren Stellen punktuell zu unterstützen und einem Kippen des Werkstückteils entgegenzuwirken.

Bei einer Ausführungsform der erfindungsgemäßen Maschine ist im Spalt ein Unterstützungsschlitten angeordnet, der zusätzlich in der ersten Richtung (in X-Richtung) gesteuert verfahrbar ist. In diesem Fall ist nicht nur die Abmessung des Unterstützungsschlittens in Y-Richtung deutlich kleiner als die Länge des Spalts, sondern auch die Abmessung des Unterstützungsschlittens in X-Richtung ist geringer als die Breite des Spalts, so dass der Unterstützungsschlitten sowohl in X-Richtung als auch in Y-Richtung in dem Spalt verfahrbar ist. Ein solcher Unterstützungsschlitten kann zum Freischnitt sowohl in X-Richtung als auch in Y-Richtung verfahren und unter dem freizuschneidenden Werkstückteil positioniert werden, um dieses beim Freischnitt zu unterstützen. Aufgrund der geringen Abmessungen bildet ein solcher Unterstützungsschlitten nur eine kleine Störkontur für die Bewegung des Bearbeitungsstrahls innerhalb des Schneidspalts. Beim Schneiden größerer Werkstückteile kann der Unterstützungsschlitten während der Bearbeitung sogar vollständig innerhalb der zu schneidenden Kontur angeordnet sein und das Werkstückteil in einem Teilbereich unterstützen.

Um eine möglichst gute Unterstützung des Werkstückteils zu gewährleisten, weist in einer vorteilhaften Ausführungsform der Unterstützungsschlitten an mindestens einer Seitenkante der Auflagefläche eine Aussparung auf, in welcher der Bearbeitungsstrahl beim Freischnitt positioniert wird, so dass das Werkstückteil beidseitig der Aussparung unterstützt ist.

Bei einer weiteren Ausführungsform weist die Maschine eine zusätzliche, dritte Bewegungseinrichtung (Zusatzachse) zur Bewegung des Bearbeitungskopfs in der ersten Richtung (X-Richtung) innerhalb des Spalts auf. Der Verfahrbereich des Bearbeitungskopfs in X-Richtung ist auf den Spalt beschränkt, d.h. die Breite des Spalts ist größer bzw. entspricht gerade dem Verfahrbereich des Bearbeitungskopfs in X-Richtung. Aufgrund der geringeren zu beschleunigenden Massen ist die Zusatzachsbewegung des Bearbeitungskopfs in X-Richtung dynamischer als die Bewegung des Werkstücks in X-Richtung, so dass sich insbesondere kleine Konturen sehr viel schneller mit der Achsbewegung der Zusatzachse - ggf. in Kombination mit der Bewegung des Werkstücks in X-Richtung - realisieren lassen.

Der Unterstützungsschlitten kann eine geschlossene Auflagefläche aufweisen, die keine Öffnung für den Durchtritt des Bearbeitungsstrahls aufweist und eine gute flächige Abstützung des Werkstücks ermöglicht. Die Auflagefläche ist beispielsweise aus mehreren Bürsten als Auflageelementen gebildet. Die Auflagefläche wird in diesem Fall beim Freischneiden eines Werkstückteils, d.h. im Moment der vollständigen Trennung vom Restwerkstück, unter dem Werkstückteil, aber neben dem Bearbeitungsstrahl angeordnet. Eine Freischneideposition entlang der Schnittkontur des freizuschneidenden Werkstückteils, an der das Werkstückteil vollständig vom (Rest-)Werkstück getrennt wird, sollte in diesem Fall auf der dem Unterstützungsschlitten abgewandten Seite des Werkstückteils angeordnet sein, um einen ausreichendem Abstand des Bearbeitungsstrahls zum Unterstützungsschlitten und trotzdem eine gute Unterstützung des Werkstückteils beim Freischnitt sicherzustellen.

In einer alternativen Ausführungsform ist in der Auflagefläche des Schlittens mindestens eine Öffnung für den Durchtritt des Bearbeitungsstrahls angeordnet. Ebenso können zwei Unterstützungsschlitten vorgesehen sein, die gekoppelt im Spalt in der zweiten Richtung (Y-Richtung) verfahrbar sind und zwischen denen in der ersten Richtung (X-Richtung) ein Spalt gebildet ist, der eine Öffnung für den Durchtritt des Laserstrahls bildet. Der Unterstützungsschlitten kann in diesen Fällen während des Schneidens so unter dem Werkstückteil angeordnet werden, dass dieses beidseitig zum Bearbeitungsstrahl flächig abgestützt wird, um ein Kippen des Werkstückteils sicher zu verhindern. Diese Ausführungsform ermöglicht auch eine größere Freiheit bei der Wahl der Freischneideposition entlang der Schnittkontur des freizuschneidenden Werkstückteils.

Beim Schneiden kleiner Werkstückteile kann ein solcher Unterstützungsschlitten bereits vor dem Einstich in das Werkstück so unter dem Bearbeitungskopf positioniert werden, dass der Bearbeitungsstrahl nach dem Durchtritt durch das Werkstück durch die Öffnung in der Auflagefläche trifft. Vor dem Freischnitt kann der Bearbeitungsstrahl in eine von einer Steuerungseinrichtung der Maschine vorgegebene Position innerhalb der Öffnung bewegt werden, die eine möglichst großflächige Unterstützung des freigeschnittenen Werkstückteils durch die Auflagefläche gewährleistet.

Bei einer Weiterbildung dieser Ausführungsform sind in der Auflagefläche des Unterstützungstisches mehrere Öffnungen mit unterschiedlicher Größe, d.h. mit unterschiedlichem Flächeninhalt, und/oder mit unterschiedlicher Geometrie angeordnet, um unterschiedliche Werkstückteile beim Freischnitt jeweils bestmöglich unterstützen zu können. Eine große Öffnung ermöglicht eine dynamische Bewegung des Bearbeitungskopfes in X- und Y-Richtung innerhalb der Öffnung, ohne dass eine Positionierbewegung des Unterstützungsschlittens stattfinden muss, und ist daher vor allem bei einer Maschine vorteilhaft, die eine Zusatzachse für eine dynamische Bewegung des Bearbeitungskopfs in X-Richtung innerhalb des Spalts aufweist. Bei kleinen Werkstückteilen ist es dagegen günstig, wenn diese zumindest beim Freischnitt, d.h. im Moment der vollständigen Freitrennung, über einer möglichst kleinen Öffnung in der Auflagefläche angeordnet werden, so dass sie möglichst flächig unterstützt werden können. Die angepasste Unterstützung des Werkstücks bzw. eines Werkstückteils zum Zeitpunkt des Freischnitts sorgt für eine Erhöhung der Prozesssicherheit. Die Öffnungen in der Auflagefläche können voneinander beabstandet, d.h. separat, angeordnet sein.

Es ist auch möglich, dass mindestens zwei der Öffnungen miteinander verbunden sind. Eine solche Verbindung kann beispielsweise durch eine spaltförmige Aussparung in der Auflagefläche hergestellt werden, in welcher der Bearbeitungsstrahl hin und her bewegt werden kann. Eine derartige Aussparung bzw. Verbindung zwischen den Öffnungen unterschiedlicher Größe, die sich typischer Weise in Y-Richtung erstreckt, ermöglicht ein Verfahren des Unterstützungsschlittens relativ zum Bearbeitungsstrahl zum "Umschalten" zwischen den Öffnungen, ohne dass der Bearbeitungsstrahl hierbei ausgeschaltet werden muss. Auf diese Weise kann bei gezündetem Bearbeitungsstrahl beispielsweise zwischen einer großen und einer kleinen Öffnung hin und her geschaltet werden. Mehrere miteinander verbundene Öffnungen können eine zusammenhängende Aussparung mit mehreren Bereichen unterschiedlichen Durchmessers bzw. unterschiedlicher Größe und/oder Geometrie bilden.

Vorzugsweise ist mindestens eine der Öffnungen mit einer sich in X-Richtung erstreckenden Außenkante der Auflagefläche des Unterstützungsschlittens verbunden. Die Verbindung kann beispielsweise durch eine spaltartige Aussparung in der Auflagefläche hergestellt werden. Alternativ kann eine Öffnung entlang ihrer Außenkontur die Außenkante der Auflagefläche schneiden, um die Verbindung zu bilden. Ein solcher Unterstützungsschlitten mit einer seitlich für den Bearbeitungsstrahl geöffneten Auflagefläche kann, falls erforderlich, ohne Unterbrechung des Schneidvorgangs unter dem Bearbeitungsstrahl positioniert werden, um auf diese Weise Werkstückteile beim Freischnitt optimal zu unterstützen.

Beispielsweise können beim Schneiden von Werkstückteilen mittlerer Größe die Innenkonturen und ein Großteil der Außenkonturen des Werkstückteils ohne Einsatz des Unterstützungsschlittens geschnitten werden. Vor dem Freischnitt wird der Bearbeitungsstrahl durch die seitlich offene Öffnung bzw. durch die seitlich offene Aussparung "eingefädelt", so dass das Werkstückteil während des Freischneidens und nach dem Freischneiden durch den Unterstützungsschlitten abgestützt werden kann. Durch den seitlich offenen Unterstützungsschlitten wird ein "fliegendes" Einbringen des Unterstützungsschlittens in den Schneidbereich ermöglicht. Für das "fliegende" Einbringen des Bearbeitungsstrahls wird auf eine Zusatzachsbewegung des Bearbeitungskopfs verzichtet, d.h. die Position des Bearbeitungskopfs in X-Richtung bleibt während des Einfädelns konstant. Die Position des Laserstrahls für das Einfädeln kann sich beispielsweise in der Mitte des Spalts zwischen den beiden Werkstückauflageflächen befinden.

Vorzugsweise kann der Unterstützungsschlitten in eine Parkposition außerhalb des Verfahrbereichs des Bearbeitungskopfs in Y-Richtung, d.h. an eine Position am äußeren Rand oder außerhalb des Spalts, verfahren werden. Beim Schneiden großer, biegesteifer Werkstückteile wird der Unterstützungsschlitten in die Parkposition verfahren, da eine Unterstützung derartiger Werkstückteile im Spalt nicht erforderlich ist.

Bei einer weiteren Ausführungsform ist/sind zumindest ein Teilbereich der Auflagefläche des Unterstützungsschlittens und/oder der Unterstützungsschlitten selbst in Schwerkraftrichtung (Z-Richtung) verfahrbar und/oder nach unten schwenkbar. Um einen Kontakt des Unterstützungsschlittens mit dem Werkstück gezielt zu vermeiden oder herzustellen, können der Unterstützungsschlitten oder dessen Auflagefläche relativ zum restlichen Unterstützungsschlitten in Z-Richtung verfahrbar ausgeführt sein. Während des Verfahrens des Unterstützungsschlittens in Y-Richtung in dem Spalt können auf diese Weise der Unterstützungsschlitten oder dessen Auflagefläche geringfügig abgesenkt werden, so dass es nicht zu einem Verkratzen der Werkstückunterseite durch die Auflagefläche bzw. durch den Unterstützungsschlitten kommt. Zum Unterstützen des zu trennenden Werkstückteils, zumindest direkt vor dem Freischnitt, wird die Auflagefläche bzw. der Unterstützungsschlitten durch Anheben in direkten Kontakt zur Unterseite des Werkstückteils gebracht.

Zusätzlich können der Unterstützungsschlitten oder dessen Auflagefläche schwenkbar ausgeführt sein, so dass auf der Auflagefläche nach dem Freischnitt aufliegende Werkstückteile durch eine Schwenkbewegung der Auflagefläche nach unten abrutschen können. Auch eine aufeinanderfolgende oder kombinierte Absenk- und Schwenkbewegung ist möglich. Auf diese Weise können freigeschnittene Werkstückteile zunächst durch eine Absenkbewegung der Auflagefläche sicher aus dem Restwerkstück gelöst werden, bevor sie durch die Schwenkbewegung nach unten aus dem Bearbeitungsbereich entfernt werden.

Bei einer weiteren Ausführungsform ist der Unterstützungsschlitten mechanisch an mindestens eine feststehende, benachbart zum Spalt angeordnete Ausschleusklappe angebunden und verfahrbar geführt, sodass ein Schwenken des Unterstützungsschlittens zusammen mit der oder den Ausschleusklappen ausgeführt werden kann. Das Ausschleusen von auf der Auflagefläche aufliegenden Werkstückteilen kann in diesem Fall beispielsweise durch ein langsames Absenken der Ausschleusklappe gemeinsam mit dem Unterstützungsschlitten nach unten und eine anschließende (schnelle) Kippbewegung der Ausschleusklappe zusammen mit dem Unterstützungsschlitten erfolgen. Auf diese Weise wird sichergestellt, dass Werkstückteile prozesssicher nach unten aus dem Restgitter bzw. aus dem Restwerkstück entnommen werden können. Die gemeinsame Bewegung bzw. die Anbindung des Unterstützungsschlittens an die Ausschleusklappe kann beispielsweise über ein Gestänge erfolgen.

Bei einer weiteren Ausführungsform bildet die Auflagefläche des Unterstützungsschlittens die Oberseite eines Absaugkastens ("Catchers"), der an eine Absaugeinrichtung zur Absaugung von beim Schneiden anfallender Schlacke sowie sonstiger Prozessreststoffe angeschlossen ist.

Bei einer weiteren Ausführungsform ist an dem Unterstützungsschlitten - typischer Weise benachbart zur Auflagefläche - ein Kleinteilebehälter und/oder eine Teilerutsche angebracht. Der Kleinteilebehälter, z.B. in der Art eines Korbs, dient zum Auffangen von beim trennenden Bearbeiten gebildeten kleinen Werkstückteilen. Beim Schneiden kleiner Werkstückteile, die nicht auf der Auflagefläche des Unterstützungsschlittens aufliegen, können der Kleinteilebehälter oder die Kleinteilerutsche kurz vor dem Freischnitt unter das freizuschneidende Werkstückteil gefahren werden. Auf diese Weise ist eine Sortierung von Kleinteilen in frei durch den Spalt fallende Schrott-Teile und über die Teilerutsche ausgeschleuste Gutteile möglich.

Durch eine schnelle Bewegung des Unterstützungsschlittens innerhalb des Spalts kann eine Relativbewegung des Unterstützungsschlittens zu einem auf der Auflagefläche aufliegenden Werkstückteil erzeugt werden, durch die die Auflagefläche unter dem Werkstückteil weggezogen und dieses von der Auflagefläche in den Spalt oder auf die benachbart angeordnete Teilerutsche oder in den Kleinteilebehälter befördert wird.

Bei einer Weiterbildung umfasst die Werkzeugmaschine zusätzlich eine Steuerungseinrichtung, welche ausgebildet ist, die Position des Unterstützungsschlittens in dem Spalt in Abhängigkeit von der Größe, der Kontur und/oder der Dicke eines von dem Werkstück beim trennenden Bearbeiten freizuschneidenden Werkstückteils festzulegen. Die Steuerungseinrichtung dient zum gesteuerten Verfahren des Unterstützungsschlittens in dem Spalt in Y-Richtung und ggf. zusätzlich in X-Richtung. Die Positionierung des Unterstützungsschlittens kann synchron zur Bewegung des Bearbeitungskopfs in Y-Richtung sowie ggf. in X-Richtung erfolgen.

Die Bewegung des Unterstützungsschlittens erfolgt aber in der Regel unabhängig von der Bewegung des Bearbeitungskopfs in Y-Richtung. Auf diese Weise kann der Unterstützungsschlitten, falls dieser z.B. beim Schneiden großer Werkstückteile nicht benötigt wird, vom Verfahrweg des Bearbeitungsstrahls beabstandet angeordnet werden und beispielsweise in eine Parkposition außerhalb des Verfahrbereichs des Bearbeitungskopfs verbracht werden. Wird der Unterstützungsschlitten zur Unterstützung von kippgefährdeten Werkstückteilen benötigt, kann dieser benachbart zur aktuellen Bearbeitungsposition angeordnet werden. Für den Fall, dass mindestens eine Öffnung in der Auflagefläche des Unterstützungsschlittens gebildet ist, kann der Unterstützungsschlitten insbesondere mit der Öffnung an der Bearbeitungsposition angeordnet werden, so dass der Bearbeitungsstrahl durch die Öffnung hindurch tritt.

Bei einer Weiterbildung ist die Steuerungseinrichtung ausgebildet, die Position des Unterstützungsschlittens und/oder der Öffnung in der Auflagefläche in der ersten Richtung (X-Richtung) in Abhängigkeit von der Bewegung bzw. der Position des Bearbeitungskopfes in der ersten Richtung (X-Richtung) festzulegen. In diesem Fall erfolgt die Festlegung der Position des Unterstützungsschlittens innerhalb des Spalts bzw. die Festlegung der Position der Öffnung in der Auflagefläche in Abhängigkeit von der Zusatzachsbewegung des Bearbeitungskopfs. Beispielsweise kann hierbei der in X-Richtung bewegbare Unterstützungsschlitten synchron zur Zusatzachsbewegung des Bearbeitungskopfs verfahren werden, um ein Freischneiden des Werkstückteils innerhalb einer an der Auflagefläche des Unterstützungsschlittens gebildeten Aussparung zu ermöglichen. Auch die Öffnung in der Auflagefläche kann während des Freischneidens oder unmittelbar vor dem Freischneiden in Abhängigkeit von der Zusatzachsbewegung des Bearbeitungskopfs verschoben oder gedreht werden, um eine möglichst großflächige Unterstützung des Werkstückteils im Moment des Freischnitts zu gewährleisten.

Ein weiterer Aspekt der Erfindung betrifft ein Verfahren zum trennenden Bearbeiten eines Werkstücks an einer Maschine wie oben beschrieben, umfassend: Wählen einer Position des Unterstützungsschlittens in dem Spalt in Abhängigkeit von der Größe, der Kontur und/oder der Dicke eines von dem Werkstück beim trennenden Bearbeiten freizuschneidenden Werkstückteils. Wie weiter oben im Zusammenhang mit der Steuerungseinrichtung beschrieben wurde, kann der Unterstützungsschlitten zur Unterstützung von kippgefährdeten, typischer Weise kleinen bzw. nicht biegesteifen Werkstückteilen in der Nähe der Bearbeitungsposition bzw. an der Bearbeitungsposition selbst angeordnet werden. Bei der Bearbeitung von nicht kippgefährdeten, größeren und biegesteifen Werkstückteilen kann der Unterstützungsschlitten weiter beabstandet zur Bearbeitungsposition, beispielsweise an einer Parkposition, angeordnet werden.

Bei einer Variante des Verfahrens erfolgt das Wählen einer Position des Unterstützungsschlittens in der ersten Richtung (X-Richtung) und/oder das Wählen einer Position der Öffnung der Auflagefläche in der ersten Richtung in Abhängigkeit von einer Position des Bearbeitungskopfes in der ersten Richtung, um eine möglichst großflächige Unterstützung von freizuschneidenden Werkstückteilen zu ermöglichen.

Bei einer weiteren Variante wird der Unterstützungsschlitten unter einem freizuschneidenden Werkstückteil angeordnet, und zwar typischer Weise unter einem kippgefährdeten freizuschneidenden Werkstückteil. Werkstückteile, die kleiner sind als die Breite des Spalts und daher beim Freischneiden bzw. nach dem Freischneiden nur auf einer der beiden Werkstückauflagen aufliegen sowie nicht biegesteife Werkstückteile sind in der Regel kippgefährdet und sollten beim Freischneiden durch die Auflagefläche des Unterstützungsschlittens unterstützt werden.

Bei einer weiteren Variante werden eine Freischneideposition entlang einer Schnittkontur eines freizuschneidenden Werkstückteils sowie die Position des Unterstützungsschlittens und/oder der Öffnung in der Auflagefläche des Unterstützungsschlittens so gewählt, dass beim Freischneiden eine maximale flächige Unterstützung des freizuschneidenden Werkstückteils durch die Auflagefläche erfolgt und/oder die Lagestabilität des Werkstückteils durch die Auflagefläche gewährleistet ist. Bei der Freischneideposition handelt es sich um diejenige Position entlang der Schnittkontur, an der das Werkstückteil vollständig vom (Rest-)Werkstück freigeschnitten wird. Um ein Kippen des freigeschnittenen Werkstückteils zu verhindern, sollte die Freischneideposition so gewählt werden, dass bei geeignet positioniertem Unterstützungsschlitten und ggf. bei geeigneter Positionierung der Öffnung die Auflagefläche bzw. deren Auflageelemente das Werkstückteil gegen den einwirkenden Schneidgasdruck in einer stabilen Lage hält bzw. halten.

Zum Ausschleusen eines freigeschnittenen Werkstückteils aus der Maschine bestehen mehrere Möglichkeiten eines Ausschleusverfahrens:
Bei einer Variante erfolgt das Ausschleusen des freigeschnittenen Werkstückteils durch Erzeugen einer Relativbewegung zwischen dem freigeschnittenen Werkstückteil und dem Unterstützungsschlitten durch beschleunigtes Bewegen des Unterstützungsschlittens innerhalb des Spalts. Bei dieser Variante wird der Unterstützungsschlitten so schnell innerhalb des Spalts verfahren bzw. so schnell beschleunigt, dass die Auflagefläche unter dem Werkstückteil weggezogen wird, so dass dieses die flächige Unterstützung durch die Auflagefläche verliert und idealer Weise im freien Fall nach unten aus dem Bearbeitungsbereich entfernt wird. Bei dem freigeschnittenen Werkstückteil kann es sich sowohl um ein Gutteil als auch um ein Restteil (Abfallteil, Butzen) handeln, das entsorgt werden muss. Unterhalb der Werkstückauflageflächen bzw. unter dem Spalt können Gutteile und Restteile beispielsweise von einer Teilerutsche aufgenommen werden und von der bei der Bearbeitung anfallenden Schlacke sowie voneinander getrennt werden.

Alternativ oder zusätzlich zum Ausschleusen durch den Spalt kann auch eine Entnahme der Werkstückteile nach oben über Saug- oder Magnetgreifer erfolgen. Sofern die Werkstückauflageflächen als Förderbänder ausgebildet sind, kann ein Ausschleusen auch durch eine Bewegung der bandförmigen Werkstückauflageflächen in der ersten Richtung (X-Richtung) erfolgen. Sofern mindestens eine der beiden Werkstückauflageflächen an einer Seite des Spalts eine oder mehrere Ausschleusklappen aufweist, können freigeschnittene Werkstückteile auch durch eine Schwenkbewegung der Klappe(n) nach unten aus dem Bearbeitungsbereich entfernt werden.

Das Ausschleusen eines freigeschnittenen Werkstückteils kann auch durch Schwenken zumindest eines Teilbereichs der Auflagefläche des Unterstützungsschlittens oder durch Schwenken des Unterstützungsschlittens erfolgen. Wie weiter oben beschrieben wurde, kann die Auflagefläche zu diesem Zweck einen oder mehrere nach unten schwenkbare Teilbereiche aufweisen, um das Ausschleusen von Kleinteilen zu ermöglichen. Insbesondere wenn der Unterstützungsschlitten mechanisch, z.B. über ein Gestänge, mit einer Ausschleusklappe gekoppelt ist, kann auch eine gemeinsame Schwenkbewegung des Unterstützungsschlittens und der Ausschleusklappe erfolgen, um freigeschnittene Werkstückteile prozesssicher auszuschleusen. Auch ohne das Vorsehen einer Ausschleusklappe, die benachbart zum Spalt angeordnet ist, kann der Unterstützungsschlitten zum Ausschleusen nach unten geschwenkt werden. Vor dem Schwenken kann ein vorheriges Absenken des Unterstützungsschlittens erfolgen, um das freigeschnittene Werkstückteil prozesssicher, d.h. ohne Verhaken, aus dem Restwerkstück zu lösen.

Bevorzugt erfolgt das Ausschleusen des freigeschnittenen Werkstückteils durch Absenken, d.h. durch eine Linearbewegung, des Unterstützungsschlittens in Schwerkraftrichtung, Verfahren des Unterstützungsschlittens in der zweiten Richtung und anschließendes Erzeugen einer Relativbewegung zwischen dem freigeschnittenen Werkstückteil und dem Unterstützungsschlitten. Wenn der Unterstützungsschlitten in Z-Richtung verfahrbar ausgebildet ist, kann er zum Ausschleusen des Werkstückteils zunächst abgesenkt und innerhalb des Spalts verfahren werden, um anschließend das freigeschnittene Werkstückteil gezielt an einer bestimmten Position in Y-Richtung durch schnelles Wegziehen des Unterstützungsschlittens nach unten fallen zu lassen.

Die Erfindung betrifft auch ein Computerprogrammprodukt, welches die Durchführung aller Schritte des oben beschriebenen Verfahrens bewirkt, wenn das Computerprogramm auf einer Datenverarbeitungsanlage abläuft. Bei der Datenverarbeitungsanlage handelt es sich um eine Steuerungseinrichtung der Maschine, auf der ein Bearbeitungsprogramm abläuft, welches im Wesentlichen in einer Abfolge von Steuerungsbefehlen zum Koordinieren der Bewegungen des Werkstücks, des Bearbeitungskopfs, des Unterstützungsschlittens sowie ggf. der Öffnung in der Auflagefläche des Unterstützungsschlittens besteht.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Darstellung eines Ausführungsbeispiels einer Laserbearbeitungsmaschine zum trennenden Bearbeiten von plattenförmigen Werkstücken mit einem verfahrbaren Unterstützungsschlitten,
- Fig. 2: eine Darstellung des Unterstützungsschlittens von Fig. 1 in einer Parkposition,
- Fig. 3: eine Darstellung des Unterstützungsschlittens von Fig. 1 beim Freischneiden eines Werkstückteils,
- Fig. 4a-c: drei Darstellungen eines mechanisch mit einer Ausschleusklappe gekoppelten Unterstützungsschlittens,
- Fig. 5: eine Darstellung eines Unterstützungsschlittens mit einer Auflagefläche mit zwei separaten Öffnungen,
- Fig. 6: eine Darstellung eines Unterstützungsschlittens mit einer seitlich angebrachten Teilerutsche,
- Fig. 7: eine Darstellung eines Unterstützungsschlittens mit einem seitlich angebrachten Kleinteilebehälter und einem Absaugkasten,
- Fig. 8a,b: Darstellungen eines in zwei Richtungen in einem Spalt gesteuert verfahrbaren Unterstützungsschlittens beim Freischneiden eines großen Werkstückteils sowie von zwei kleinen Werkstückteilen.

In der folgenden Beschreibung der Zeichnungen werden für gleiche bzw. für funktionsgleiche Bauteile identische Bezugszeichen verwendet.

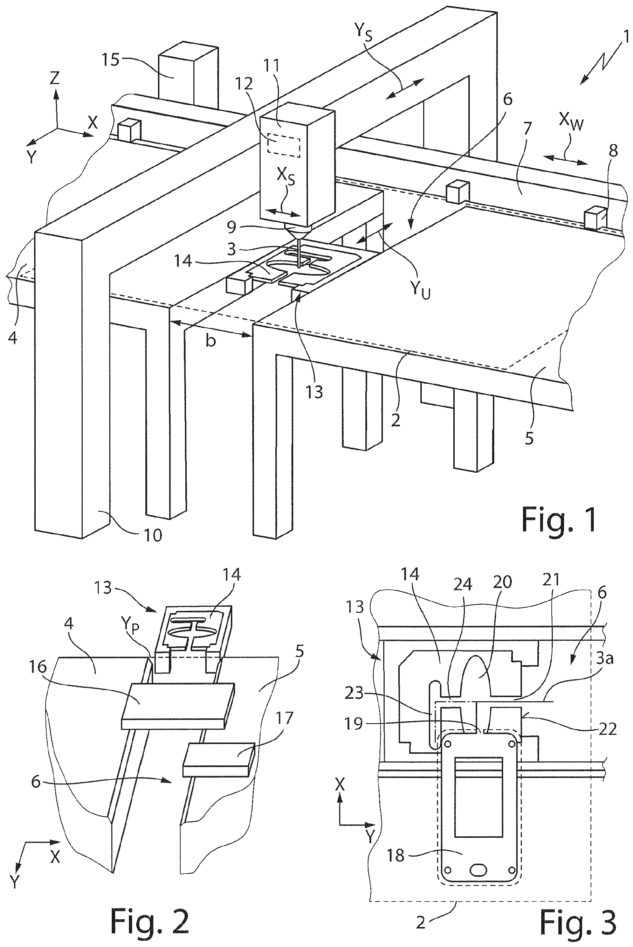

Fig. 1 zeigt einen beispielhaften Aufbau einer Maschine 1 zur Laserbearbeitung, genauer gesagt zum Laserschneiden, eines gestrichelt dargestellten plattenförmigen Werkstücks 2 mittels eines Laserstrahls 3. Zur schneidenden Bearbeitung des Werkstücks 2 kann an Stelle des Laserstrahls 3 auch eine andere Art von thermischem Bearbeitungsstrahl, beispielsweise eine Plasmafackel, oder ein Wasserstrahl eingesetzt werden. Das Werkstück 2 liegt bei der Bearbeitung auf zwei fest stehenden Werkstückauflageflächen 4, 5 auf, die beispielsweise durch auf den Oberseiten von zwei Werkstücktischen angeordnete Bürsten (nicht gezeigt) gebildet werden. Die Bürsten definieren eine Auflageebene (X-Y-Ebene eines XYZ-Koordinatensystems) zur Auflage des Werkstücks 2, wie es beispielsweise in der JP2001170727A offenbart ist.

Mittels einer herkömmlichen Bewegungs- und Halteeinrichtung 7, welche einen Antrieb sowie Klemmen 8 (Spannpratzen) zum Festhalten des Werkstücks 2 aufweist, kann das Werkstück 2 auf den ortsfesten Werkstückauflageflächen 4, 5 in einer ersten Bewegungsrichtung X (im Folgenden: X-Richtung) gesteuert verschoben und an eine vorgegebene Werkstückposition X_{W} bewegt werden. Um die Bewegung des Werkstücks 2 auf den Auflageflächen 4, 5 in X-Richtung zu erleichtern, können alternativ oder zusätzlich zu den Bürsten, wie in der JP2001170727A gezeigt, Gleitrollen auf den Werkstücktischen angebracht sein. Außerdem ist es beispielsweise möglich, zur Bewegung des Werkstücks 2 in X-Richtung die Werkstückauflageflächen 4, 5 selbst als Bewegungseinrichtung auszugestalten, beispielsweise in Form eines (umlaufenden) Förderbandes, wie dies in der DE 10 2011 051 170 A1 der Anmelderin beschrieben ist, oder in Form einer Werkstückauflage, wie sie in der JP 06170469 beschrieben ist.

Zwischen den beiden Werkstückauflageflächen 4, 5 ist ein Spalt 6 gebildet, der sich in einer zweiten Richtung (im Folgenden: Y-Richtung) über den gesamten Verfahrweg eines Laserschneidkopfs 9 erstreckt, der den Laserstrahl 3 auf das Werkstück 2 ausrichtet und fokussiert. Der Laserschneidkopf 9 ist mittels eines als Bewegungseinrichtung dienenden angetriebenen Schlittens 11, der an einem fest stehenden Portal 10 geführt ist, innerhalb des Spalts 6 in Y-Richtung gesteuert verfahrbar. Der Laserschneidkopf 9 ist im gezeigten Beispiel innerhalb des Spalts 6 zusätzlich auch in X-Richtung gesteuert verfahrbar und kann mit Hilfe einer an dem Schlitten 11 angebrachten zusätzlichen Bewegungseinrichtung 12 (Zusatzachse), beispielsweise in Form eines Linearantriebs, in X-Richtung gesteuert verfahren werden. Der maximale Verfahrweg des Laserschneidkopfs 9 in X-Richtung entspricht der Breite b des Spalts 6.

Mit Hilfe der aufeinander aufbauenden Bewegungseinrichtungen 11, 12 kann der Laserschneidkopf 9 sowohl in X-Richtung als auch in Y-Richtung an einer gewünschten Schneidkopfposition X_{S}, Y_{S} innerhalb des Spalts 6 positioniert werden. Gegebenenfalls kann der Laserschneidkopf 9 auch entlang einer dritten Bewegungsrichtung Z (im Folgenden: Z-Richtung) verschoben werden, beispielsweise um eine geeignete Fokuslage für die Bearbeitung des plattenförmigen Werkstücks 2 einzustellen.

Innerhalb des Spalts 6, welcher den Bearbeitungsbereich des Laserschneidkopfs 9 in X-Richtung und in Y-Richtung begrenzt, ist ein Unterstützungsschlitten 13 angeordnet, der sich über die gesamte Breite b des Spalts 6 erstreckt und in dem Spalt 6 in Y-Richtung gesteuert verfahrbar ist. Die gesteuerte Bewegung des Unterstützungsschlittens 13 in dem Spalt 6 kann beispielsweise mittels eines Spindelantriebs erfolgen, wobei die Spindelmutter an dem Unterstützungsschlitten 13 angebracht ist und die Spindel sowie der Antriebsmotor an einer der beiden fest stehenden Werkstückauflagen 4, 5 vorgesehen sind. Es versteht sich, dass die gesteuerte Bewegung des Unterstützungsschlittens 13 in dem Spalt 6 auch auf andere Weise realisiert werden kann.

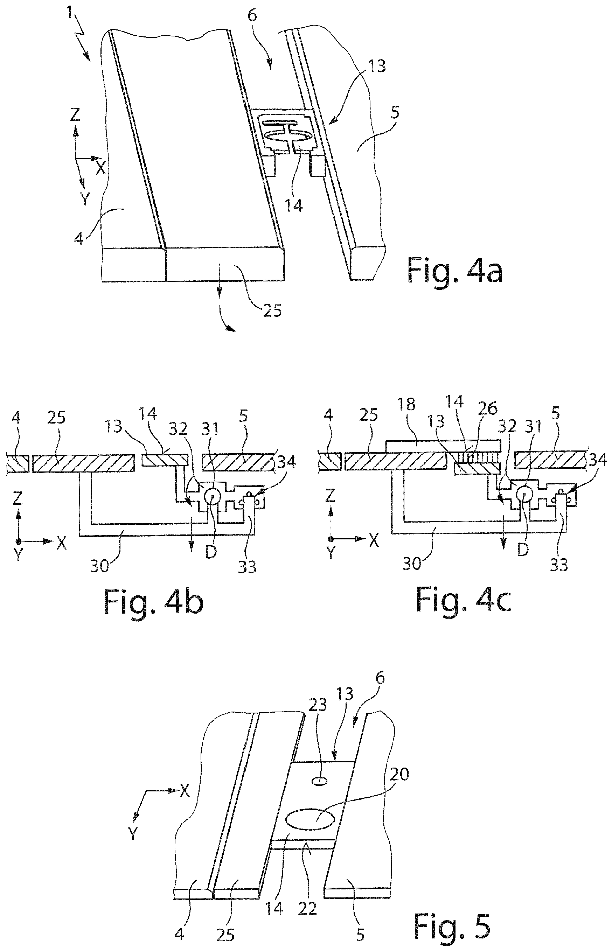

Der Unterstützungsschlitten 13 kann in dem Spalt 6 an eine gewünschte Position Yᵤ in Y-Richtung bewegt werden, um dort das Werkstück 2, genauer gesagt von dem Werkstück 2 freizuschneidende bzw. beim Bearbeiten geschnittene Werkstückteile, mittels einer an dem Unterstützungsschlitten 13 angeordneten bzw. angebrachten Auflagefläche 14 zu unterstützen. Die Auflagefläche 14 des Unterstützungsschlittens 13, die durch Bürsten 26 als Auflageelemente (wie in Fig. 4c gezeigt) gebildet sein kann, schließt in diesem Fall in Z-Richtung bündig mit den Werkstückauflageflächen 4, 5 ab, d.h. die Auflagefläche 14 befindet sich ebenfalls in der Auflageebene für das Werkstück 2.

Zur Steuerung der schneidenden Bearbeitung weist die Maschine 1 eine Steuerungseinrichtung 15 auf, die zur Koordinierung der Bewegungen des Werkstücks 2, des Laserschneidkopfs 9 sowie des Unterstützungsschlittens 13 dient, um eine gewünschte Werkstückposition X_{W}, eine gewünschte Schneidkopfposition X_{B}, Y_{B} sowie eine gewünschte Position Y_{U} des Unterstützungsschlittens 13 einzustellen, um das Schneiden eines Werkstückteils mit einer vorgegebenen Schnittkontur zu ermöglichen und das Werkstückteil falls erforderlich zu unterstützen.

Die Bewegung des Unterstützungsschlittens 13 kann hierbei synchron zur Bewegung des Schneidkopfs 9 erfolgen, d.h. der Abstand zwischen der Position Yᵤ des Unterstützungsschlittens 13 und der Schneidkopfposition Y_{B} in Y-Richtung ist konstant. Die Bewegung des Unterstützungsschlittens 13 kann auch unabhängig von der Bewegung des Schneidkopfs 9 erfolgen, d.h. der Abstand zwischen der Position Y_{U} des Unterstützungsschlittens 13 und der Schneidkopfposition Y_{B} in Y-Richtung verändert sich während der Bearbeitung.

Letzteres ermöglicht es, den Abstand der Position Y_{U} des Unterstützungsschlittens 13 von der Schneidkopfposition Y_{S} in Abhängigkeit von der Größe und/oder der Dicke eines von dem Werkstück 2 freizuschneidenden Werkstückteils zu wählen. Dies ist günstig, da vergleichsweise große Werkstückteile, die beim Freischneiden von dem (Rest-)Werkstück 2 auf beiden Werkstückauflageflächen 4, 5 aufliegen, den Spalt 6 überbrücken und, sofern diese eine ausreichende Dicke und damit Biegesteifigkeit aufweisen, in der Regel nicht mit Hilfe des Unterstützungsschlittens 13 unterstützt werden müssen. Ein solches nicht kippgefährdetes Werkstückteil 16, das biegesteif ist und dessen Breite größer ist als die Breite b des Spalts 6, ist in Fig. 2 dargestellt. Auch bei einem weiteren in Fig. 2 dargestellten, ebenfalls vergleichsweise dicken und somit biegesteifen Werkstückteil 17, dessen Abmessungen geringer sind als die Breite b des Spalts 6, dessen Schwerpunkt aber weit genug vom Rand des Spalts 6 entfernt liegt, ist die Gefahr des Kippens in den Spalt 6 aufgrund des von einer Bearbeitungsdüse des Laserschneidkopfs 9 erzeugten, auf das Werkstückteil 17 auftreffenden Schneidgases gering, so dass dieses nicht unterstützt werden muss.

Für die Bearbeitung der in Fig. 2 gezeigten Werkstückteile 16, 17 ist es günstig, den nicht zur Unterstützung benötigten Unterstützungsschlitten 13 in einem ausreichenden Abstand von der Schneidkopfposition Yₛ anzuordnen, an der die Bearbeitung des Werkstücks 2 erfolgt, um eine Verschmutzung und/oder Beschädigung des Unterstützungsschlittens 13 durch den Laserstrahl 3 zu vermeiden. Insbesondere kann in diesem Fall der Unterstützungsschlitten 13 an einer in Fig. 2 gezeigten Parkposition Y_{P} angeordnet werden, die außerhalb des Spalts 6 und somit außerhalb des Verfahrbereichs des Schneidkopfs 9 liegt.

Bei der schneidenden Bearbeitung von kippgefährdeten Werkstückteilen, welche keine ausreichende Größe bzw. Dicke und damit Biegesteifigkeit aufweisen, wird der Unterstützungsschlitten 13 typischer Weise in der Nähe der Schneidkopfposition Yₛ unter dem freizuschneidenden Werkstückteil angeordnet, um dieses möglichst großflächig oder gezielt an bestimmten Stellen durch die Auflagefläche 14 zu unterstützen. Eine solche Unterstützung ist insbesondere während des Freischneidens eines nicht biegesteifen und/oder kippgefährdeten Werkstückteils 18 (vgl. Fig. 3) günstig. Beim Freischneiden ist das Werkstückteil 18 nur noch über einen schmalen Steg 19 mit dem in Fig. 3 gestrichelt dargestellten Rest-Werkstück 2 verbunden und wird mittels des Laserstrahls 3 vollständig von dem Rest-Werkstück 2 getrennt. Durch das aus dem Laserschneidkopf 9 austretende Schneidgas wird eine Kraft auf den innerhalb des Spalts 6 angeordneten Teilbereich des Werkstückteils 18 ausgeübt, so dass dieses nach dem Freischneiden ohne Unterstützung ggf. verkippt und sich ungewollter Weise am Restwerkstück 2 verhakt.

Um im Moment des Freischnitts eine möglichst großflächige Unterstützung des freizuschneidenden Werkstückteils 18 zu gewährleisten, wird der Laserstrahl 3, dessen Bewegungsbahn 3a in Fig. 3 dargestellt ist, über eine spaltförmige Ausnehmung 21, die mit einer sich in X-Richtung erstreckenden Außenkante 22 der Auflagefläche 14 in Verbindung steht, in eine ellipsenförmige Öffnung 20 in der Auflagefläche 14 eingefädelt. Der in die ellipsenförmige Öffnung 20 eingeführte Laserstrahl 3 wird mit Hilfe der Zusatzachse für den Freischnitt des Werkstückteils 18 in X-Richtung so positioniert, dass das Freischneiden entlang des Steges 19 ohne eine Bewegung des Unterstützungsschlittens 13 durchgeführt werden kann. Das Freischneiden erfolgt also, indem der Laserstrahl 3 in Y-Richtung entlang des Steges 19 verfahren wird, bis das Werkstückteil 18 vollständig vom Restwerkstück 2 getrennt ist.

Die vergleichsweise große ellipsenförmige Öffnung 20 ermöglicht hierbei eine hoch dynamische Bewegung des Laserstrahls 3 bzw. des Schneidkopfs 9 sowohl in X-Richtung als auch in Y-Richtung. Die Verbindung der Öffnung 20 mit der Außenkante 22 der Auflagefläche 14 ermöglicht das fliegende Einbringen des Unterstützungsschlittens 13 in den Schneidbereich. Es ist also zur Positionierung des Laserstrahls 3 innerhalb der Öffnung nicht erforderlich, den Laserstrahl 3 abzuschalten. Dies ist insbesondere beim Bearbeiten des in Fig. 3 gezeigten mittelgroßen Werkstückteils 18 vorteilhaft, da dessen Innenkonturen sowie ein Großteil der Außenkonturen ohne den Einsatz des Unterstützungsschlittens 13 geschnitten werden können, bevor dieser für das Freischneiden im Bereich des Laserschneidkopfs 9 positioniert wird.

Für Werkstückteile, die deutlich kleiner sind als das in Fig. 3 gezeigte Werkstückteil 18, ist hingegen das Freischneiden an einer möglichst kleinen Öffnung günstig, um eine möglichst großflächige Unterstützung durch die Auflagefläche 14 sicherzustellen. Bei der in Fig. 3 gezeigten Auflagefläche 13 ist eine im Wesentlichen rechteckförmige weitere Öffnung 23 zu erkennen, welche über eine weitere spaltförmige in Y-Richtung verlaufende Ausnehmung 24 mit der ellipsenförmigen Öffnung 20 in Verbindung steht, um den Laserstrahl 3 für den Freischnitt einzufädeln (in Fig. 3 gestrichelt dargestellt). Die Verbindung der Öffnungen 20, 23 untereinander ermöglicht einen Wechsel zwischen den Öffnungen 20, 23, ohne dass der Laserstrahl 3 abgeschaltet werden muss.

Bei nicht vollständig auf der Auflagefläche 14 aufliegenden Werkstückteilen 18 kann es günstig sein, wenn der Freischnitt möglichst nahe an einem der Ränder des Spalts 6, d.h. möglichst nahe an derjenigen Werkstückauflagefläche 4, 5 erfolgt, an welcher das Werkstückteil 18 teilweise aufliegt. Das Einfädeln des Laserstrahls 3 erfolgt typischer Weise ohne eine Zusatzachsbewegung, im gezeigten Beispiel in einer Stellung der Zusatzachse, bei welcher der Laserstrahl 3 in der Mitte des Spalts 6 positioniert ist. Für das Freischneiden wird der Laserstrahl 3 dann mit einer Zusatzachsbewegung in Richtung auf einen Rand des Spalts 6 bewegt, wie dies in Fig. 3 angedeutet ist. Auch das Freischneiden erfolgt in der Regel ohne eine Bewegung der Zusatzachse des Schneidkopfs 9.

Um einen Kontakt der Auflagefläche 14 des Unterstützungsschlitten 13 mit der Unterseite des Werkstücks 2 gezielt herzustellen oder zu vermeiden, kann der Unterstützungsschlitten 13 selbst oder alternativ die Auflagefläche 14 relativ zum restlichen Unterstützungsschlitten 13 in Z-Richtung gesteuert verfahrbar ausgebildet sein. Beispielsweise kann der Unterstützungsschlitten 13 bei einer Bewegung in Y-Richtung leicht abgesenkt werden, so dass es nicht zu einem Verkratzen der Unterseite des Werkstücks 2 durch die Auflagefläche 14 kommt. Gegebenenfalls kann die Auflagefläche 14 selbst relativ zu einem in Fig. 1 und Fig. 2 zu erkennenden rahmenartigen Grundkörper des Unterstützungsschlittens 13 abgesenkt werden. Ist der Unterstützungsschlitten 13 an der gewünschten Position Y_{U} für den Freischnitt positioniert, kann die Auflagefläche 14 bzw. der Unterstützungsschlitten 13 nach oben angehoben und in Kontakt mit der Unterseite des Werkstücks 2 bzw. des freizuschneidenden Werkstückteils 18 gebracht werden.

Zusätzlich oder alternativ zur Möglichkeit der Absenkung in Schwerkraftrichtung Z kann der Unterstützungsschlitten 13 auch nach unten schwenkbar an den Werkstückauflageflächen 4, 5 gelagert sein, um freigeschnittene Werkstückteile 18 durch den Spalt 6 aus der Laserbearbeitungsmaschine 1 auszuschleusen. Die Schwenkbewegung des Unterstützungsschlittens 13 ist insbesondere günstig, wenn mindestens eine sich in Y-Richtung erstreckende Ausschleusklappe 25 zwischen einer der Werkstückauflageflächen 4 und dem sich in Y-Richtung erstreckenden Spalt 6 angeordnet ist, wie dies in Fig. 4a-c dargestellt ist, da in diesem Fall eine gemeinsame Absenk- und Schwenkbewegung des Unterstützungsschlittens 13 und der Ausschleusklappe 25 realisiert werden kann. Wie in Fig. 4a angedeutet ist, lässt sich die Ausschleusklappe 25 bei einer solchen Bewegung zunächst absenken, um ein Verhaken von freigeschnittenen Werkstückteilen mit dem Rest-Werkstück zu verhindern. An die vergleichsweise langsame Absenkbewegung schließt sich eine schnellere Kipp- bzw. Schwenkbewegung an, mittels derer zumindest teilweise auf der Ausschleusklappe 25 aufliegende Werkstückteile nach unten durch den Spalt 6 aus dem Bearbeitungsbereich entfernt werden können.

Wird der Unterstützungsschlitten 13 mit der Ausschleusklappe 25 mechanisch gekoppelt, kann ein gemeinsames Absenken und Schwenken des Unterstützungsschlittens 13 und der Ausschleusklappe 25 erfolgen. Ein Beispiel für die Realisierung einer solchen mechanischen Kopplung ist in Fig. 4b dargestellt. Generell sind für die gesteuerte Bewegung des Unterstützungsschlittens 13 in Y-Richtung eine Führung sowie ein Antrieb erforderlich. Bei dem in Fig. 4b gezeigten Beispiel ist der Antrieb des Unterstützungsschlittens 13 durch einen Kugelgewindetrieb 31 gebildet, dessen Spindel und Antriebsmotor an einem Gestänge 30 der Ausschleusklappe 25 angebracht sind. Die Gewindemutter 32 ist am Unterstützungsschlitten 13 angebracht und umfasst ein Führungselement 34, welches in einem als Linearführung ausgebildeten Teilbereich 33 des Gestänges 30 verschiebbar geführt ist.

Die gemeinsame Absenkbewegung des Unterstützungsschlittens 13 und der Ausschleusklappe 25 kann durch ein Absenken des Gestänges 30 erreicht werden. Die Schwenkbewegung kann durch eine Drehung um eine Drehachse D realisiert werden, die im Wesentlichen mit der Position der Achse des Kugelgewindetriebs 31 zusammenfällt. Durch die gemeinsame Schwenkbewegung können Werkstückteile, die sowohl auf der Ausschleusklappe 25 als auch auf der Auflagefläche 14 des Unterstützungsschlittens 13 aufliegen, prozesssicher durch den Spalt 6 ausgeschleust werden. Es versteht sich, dass eine kombinierte Schwenk- und Absenkbewegung des Unterstützungsschlittens 13 auch ohne eine mechanische Anbindung an eine Ausschleusklappe realisiert werden kann.

Fig. 4b zeigt ein Ausführungsbeispiel, bei dem die Auflagefläche 14 des Unterstützungsschlittens 13 durch die plane Oberseite des Unterstützungsschlittens 13 gebildet ist, während Fig. 4c ein Ausführungsbeispiel darstellt, bei dem die Auflagefläche 14 des Unterstützungsschlittens 13 an der Oberseite einer Mehrzahl von Auflageelementen 26 in Form von Bürsten gebildet ist. Auch bei dem in Fig. 4c gezeigten Beispiel schließt die von den Oberseiten der Bürsten 26 gebildete Auflagefläche 14 bündig mit den Werkstückauflageflächen 4, 5 (die ebenfalls Bürsten als Auflageelemente aufweisen können) ab, so dass ein auf der Ausschleusklappe 25 und dem Unterstützungsschlitten 13 aufliegendes Werkstückteil 18 flächig unterstützt wird.

Fig. 5 zeigt ein Detail einer Maschine 1, bei welcher die Ausschleusklappe 25 ebenfalls gemeinsam mit dem Unterstützungsschlitten 13 abgesenkt und nach unten geschwenkt werden kann. Die Auflagefläche 14 des in Fig. 5 gezeigten Unterstützungsschlittens 13 weist zwei kreisförmige Öffnungen 20, 23 auf, die nicht miteinander verbunden sind. Auch besteht keine Verbindung einer der Öffnungen 20, 23 zu einer der seitlichen Außenkanten 22 des Unterstützungsschlittens 13. Bei einer derart ausgebildeten Auflagefläche 14 ist es für die Unterstützung von kleinen Werkstückteilen günstig, wenn der Unterstützungsschlitten 13 schon beim Einstechen in das Werkstück 2 so in dem Spalt 6 positioniert wird, dass der Laserstrahl 3 durch eine der Öffnungen 20, 23 tritt, so dass eine schneidende Bearbeitung und der Freischnitt des Werkstückteils durch Bewegen des Laserstrahls 3 innerhalb der ausgewählten Öffnung 20, 23 erfolgen kann, ohne dass der Laserstrahl 3 abgeschaltet werden muss.

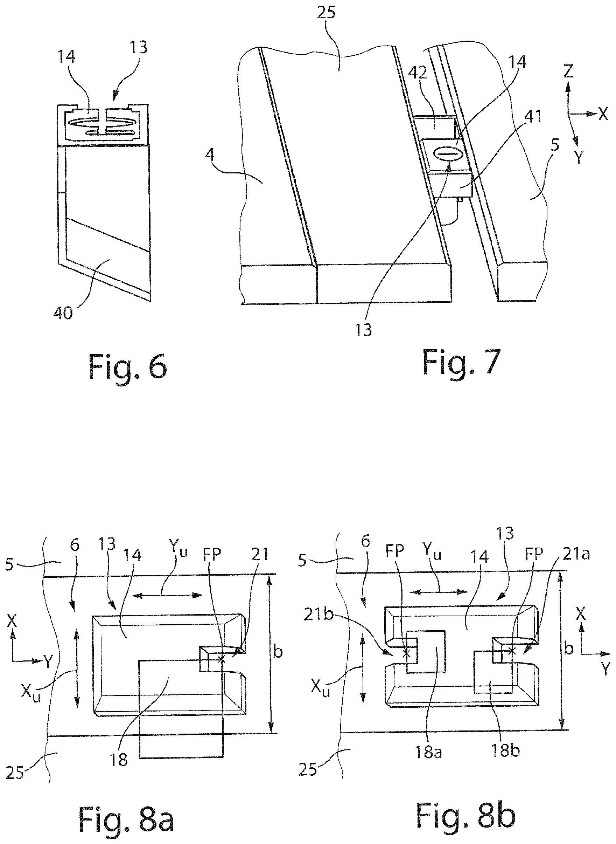

Bei dem in Fig. 6 gezeigten Unterstützungsschlitten 13 ist eine Teilerutsche 40 zum Ausschleusen von kleinen Werkstückteilen gezeigt, die benachbart zur Auflagefläche 14 an dem Unterstützungsschlitten 13 angebracht ist. Über die Rutsche 40 ausschleusbare Werkstückteile weisen Abmessungen auf, die kleiner sind als die Breite b des Spalts 6. Um solche freigeschnittene Werkstückteile auf die Rutsche 40 zu befördern, kann der Unterstützungsschlitten 13 dynamisch, d.h. mit hoher Beschleunigung, in Y-Richtung verfahren werden, so dass eine Relativbewegung zwischen dem freigeschnittenen Werkstückteil und dem Unterstützungsschlitten 13 erfolgt, das Werkstückteil zur Seite, d.h. in Y-Richtung, verschoben wird und idealer Weise im freien Fall auf die Rutsche 40 trifft.

Die Rutsche 40 kann auch dazu verwendet werden, um kurz vor dem Freischnitt unter einem freizuschneidenden Werkstückteil positioniert zu werden, das nicht auf der Auflagefläche des Unterstützungsschlittens 13 aufliegt. Auf diese Weise ist eine Trennung in frei durch den Spalt 6 fallende Abfall-Teile und über die Teilerutsche 40 ausgeschleuste Gutteile möglich. Die Rutsche 40 ist so weit unterhalb der Auflagefläche 14 angeordnet, dass ein seitliches Ausschleusen von Werkstückteilen in X-Richtung ohne eine Kollision mit den Werkstückauflageflächen 4, 5 erfolgen kann.

Das Ausschleusen von Werkstückteilen durch eine dynamische Bewegung des Unterstützungsschlittens 13 kann auch ohne die Verwendung einer an dem Unterstützungsschlitten 13 angebrachten Rutsche 40 erfolgen, indem das auf der Auflagefläche 14 aufliegende Werkstückteil seitlich verschoben wird und idealer Weise im freien Fall durch den Spalt 6 nach unten ausgeschleust wird.

Eine weitere Möglichkeit zum Ausschleusen von kleinen Werkstückteilen stellt die seitliche Anbringung eines Kleinteilebehälters 42 an dem Unterstützungsschlitten 13 dar, wie beispielhaft in Fig. 7 gezeigt ist. Im Gegensatz zur in Fig. 6 gezeigten Teilerutsche 40 dient der Kleinteilebehälter 42 zur Aufnahme und Lagerung von kleinen Werkstückteilen. Die in dem Kleinteilebehälter 42 gelagerten Teile können z.B. in der Parkposition Yp (vgl. Fig. 2) des Unterstützungsschlittens 13 entnommen werden. In Fig. 8 ebenfalls gezeigt ist ein an dem Unterstützungsschlitten 13 angebrachter Absaugkasten 41, dessen Oberseite die Auflagefläche 14 bildet. Der Absaugkasten 41 dient der Absaugung von Prozessreststoffen, z.B. von beim Schneiden anfallender Schlacke sowie sonstiger Prozessreststoffe, die über eine in Fig. 7 angedeutete Rohrverbindung zu einer Absaugeinrichtung geführt werden. Ein auf diese Weise ausgebildeter Unterstützungsschlitten 13 wird üblicherweise in Y-Richtung synchron zur Bewegung Laserstrahls 3 bzw. des Schneidkopfs 9 verfahren.

Neben den weiter oben beschriebenen Möglichkeiten zum Ausschleusen von Werkstückteilen ist es ebenfalls möglich, freigeschnittene Werkstückteile nach oben auszuschleusen, beispielsweise durch die Verwendung von Saug- oder Magnetgreifern. Falls die Werkstückauflageflächen 4, 5 anders als in Fig. 1 gezeigt in der Art eines Förderbandes ausgebildet sind, können freigeschnittene Werkstückteile auch durch eine Bewegung des Förderbandes in X-Richtung ausgeschleust werden.

Fig. 8a,b zeigen einen Unterstützungsschlitten 13, dessen Abmessungen in X-Richtung kleiner sind als die Breite b des Spalts 6, so dass der Unterstützungsschlitten 13 sowohl in X- als auch in Y-Richtung innerhalb des Spalts 6 gesteuert verfahrbar ist. Der Unterstützungsschlitten 13 wird sowohl in X-Richtung als auch in Y-Richtung an einer geeigneten Position Y_{U}, X_{U} innerhalb des Spalts 6 positioniert, um ein Werkstückteil 18 beim Freischneiden möglichst großflächig zu unterstützen. Hierbei kann, wie in Fig. 8a gezeigt ist, ein vergleichsweise großes Werkstückteil 18 sowohl von dem Unterstützungsschlitten 13 als auch von einer der Werkstückauflagen oder wie im gezeigten Beispiel von einer Ausschleusklappe 25 unterstützt werden. Für den Freischnitt wird der Laserstrahl 3 günstiger Weise in einer Aussparung 21 der Auflagefläche 14 des Unterstützungsschlittens 13 angeordnet, um das Werkstückteil 18 an einer Freischneideposition FP vom Restwerkstück freizuschneiden, die im gezeigten Beispiel an einer Ecke der quadratischen Schnittkontur des Werkstückteils 18 gebildet ist. Das in Fig. 8a gezeigte freigeschnittene Werkstückteil 18 kann durch Verschwenken der Ausschleusklappe 25 ggf. gemeinsam mit dem Unterstützungsschlitten 13 aus dem Bearbeitungsbereich entfernt werden. Zusätzlich oder alternativ kann der Unterstützungsschlitten 13 dynamisch in X-Richtung sowie ggf. in Y-Richtung verfahren werden, um durch Erzeugen einer Relativbewegung zwischen dem Unterstützungsschlitten 13 und dem Werkstückteil 18 ein Ausschleusen zu bewirken.

Fig. 8b zeigt einen Unterstützungsschlitten 13, bei dem an zwei sich in Y-Richtung gegenüberliegenden Seiten jeweils eine Aussparung 21a, 21b angebracht ist, um beim Freischneiden und Ausschleusen von Werkstückteilen 18a, 18b eine größere Flexibilität zu gewährleisten. In Fig. 8b sind zwei gleich große Werkstückteile 18a, 18b dargestellt, die beim Freischneiden an einer jeweiligen Freischneideposition FP jeweils nahezu vollständig auf der Auflagefläche 14 aufliegen und somit großflächig unterstützt werden. Auch bei dem in Fig. 8b gezeigten Beispiel kann das Ausschleusen der Werkstückteile 18a, 18b beispielsweise durch eine dynamische Bewegung des Unterstützungsschlittens 13 in X-Richtung und/oder in Y-Richtung realisiert werden, um ein Ausschleusen durch eine seitliche Verschiebung der Werkstückteile 18a, 18b relativ zur Auflagefläche 14 zu bewirken.

Zusammenfassend kann auf die oben beschriebene Weise während der schneidenden Bearbeitung, insbesondere beim Freischneiden, eine an die Größe und/oder die Dicke von freizuschneidenden Werkstückteilen angepasste Unterstützung von Werkstückteilen erfolgen. Auch kann mit Hilfe des Unterstützungsschlittens ein vereinfachtes Ausschleusen von freigeschnittenen Werkstückteilen realisiert werden.

## Patentansprüche

1. Maschine (1) zum trennenden Bearbeiten eines plattenförmigen Werkstücks (2) mittels eines Bearbeitungsstrahls (3), mit:
einer ersten Bewegungseinrichtung (7) zur Bewegung des Werkstücks (2) in einer ersten Richtung (X),
einer zweiten Bewegungseinrichtung (11) zur Bewegung eines den Bearbeitungsstrahl (3) auf das Werkstück (2) ausrichtenden Bearbeitungskopfs (9) in einer zweiten, zur ersten senkrechten Richtung (Y), sowie zwei Werkstückauflageflächen (4, 5) zur Auflage des Werkstücks (2), zwischen denen ein sich entlang der zweiten Richtung (Y) erstreckender Spalt (6) gebildet ist,
**dadurch gekennzeichnet,**
**dass** innerhalb des Spalts (6) mindestens ein in der zweiten Richtung (Y) verfahrbarer Unterstützungsschlitten (13) angeordnet ist, der eine Auflagefläche (14) zur Unterstützung des auf den Werkstückauflageflächen (4, 5) aufliegenden Werkstücks (2) und zur Unterstützung von beim trennenden Bearbeiten geschnittenen Werkstückteilen (18, 18a, 18b) aufweist und dass der Unterstützungsschlitten (13) innerhalb des Spalts (6) unabhängig vom Bearbeitungskopf (9) gesteuert verfahrbar ist.

2. Maschine nach Anspruch 1, bei welcher der Unterstützungsschlitten (13) innerhalb des Spalts (6) zusätzlich in der ersten Richtung (X) gesteuert verfahrbar ist.

3. Maschine nach einem der vorhergehenden Ansprüche, die eine zusätzliche, dritte Bewegungseinrichtung (12) zur Bewegung des Bearbeitungskopfs (9) in der ersten Richtung (X) innerhalb des Spalts (6) aufweist.

4. Maschine nach einem der vorhergehenden Ansprüche, bei welcher in der Auflagefläche (14) des Unterstützungsschlittens (13) mindestens eine Öffnung (20, 23) für den Durchtritt des Bearbeitungsstrahls (3) angeordnet ist.

5. Maschine nach Anspruch 4, bei welcher in der Auflagefläche (14) mehrere Öffnungen (20, 23) mit unterschiedlicher Größe und/oder Geometrie angeordnet sind.

6. Maschine nach Anspruch 5, bei der mindestens zwei der Öffnungen (20, 23) miteinander verbunden sind.

7. Maschine nach einem der Ansprüche 4 bis 6, bei der mindestens eine Öffnung (20) mit einer Außenkante (22) der Auflagefläche (14) des Unterstützungsschlittens (13) verbunden ist.

8. Maschine nach einem der vorhergehenden Ansprüche, bei welcher der Unterstützungsschlitten (13) in eine Parkposition (Y_{P}) außerhalb eines Verfahrbereichs des Bearbeitungskopfs (9) in der zweiten Richtung (Y) verfahrbar ist.

9. Maschine nach einem der vorhergehenden Ansprüche, bei der zumindest ein Teilbereich (28a, 28b) der Auflagefläche (14) des Unterstützungsschlittens (13) und/oder der Unterstützungsschlitten (13) selbst in Schwerkraftrichtung (Z) verfahrbar und/oder nach unten schwenkbar ist.

10. Maschine nach einem der vorhergehenden Ansprüche, bei welcher der Unterstützungsschlitten (13) entlang einer benachbart zum Spalt (6) angeordneten Ausschleusklappe (25) verfahrbar und gemeinsam mit der Ausschleusklappe (25) nach unten schwenkbar ist.

11. Maschine nach einem der vorhergehenden Ansprüche, bei der die Auflagefläche (14) des Unterstützungsschlittens (13) die Oberseite eines Absaugkastens (41) zur Absaugung von Prozessreststoffen bildet.

12. Maschine nach einem der vorhergehenden Ansprüche, bei der an dem Unterstützungsschlitten (14) ein Kleinteilebehälter (42) und/oder eine Teilerutsche (40) angebracht ist.

13. Maschine nach einem der vorhergehenden Ansprüche, weiter umfassend: eine Steuerungseinrichtung (15), welche ausgebildet ist, die Position (Y_{U}, X_{U}) des Unterstützungsschlittens (13) in dem Spalt (6) in Abhängigkeit von der Größe, der Kontur und/oder der Dicke eines von dem Werkstück (2) beim trennenden Bearbeiten freizuschneidenden Werkstückteils (16, 17, 18, 18a, 18b) festzulegen.

14. Maschine nach Anspruch 13, bei welcher die Steuerungseinrichtung (15) ausgebildet ist, die Position (X_{U}) des Unterstützungsschlittens (13) und/oder der Öffnung (26) der Auflagefläche (14) in der ersten Richtung (X) in Abhängigkeit von der Position (Xₛ) des Bearbeitungskopfes (9) in der ersten Richtung (X) festzulegen.

15. Verfahren zum trennenden Bearbeiten eines Werkstücks (2) an einer Maschine (1) nach einem der vorhergehenden Ansprüche, umfassend:
Wählen einer Position (Y_{U}, X_{U}) des Unterstützungsschlittens (13) in dem Spalt (6) in Abhängigkeit von der Größe, der Kontur und/oder der Dicke eines von dem Werkstück (2) beim trennenden Bearbeiten freizuschneidenden Werkstückteils (16, 17, 18, 18a, 18b).

16. Verfahren nach Anspruch 15, bei dem das Wählen einer Position (X_{U}) des Unterstützungsschlittens (13) in der ersten Richtung (X) und/oder das Wählen einer Position der Öffnung (26) in der Auflagefläche (14) in der ersten Richtung (X) in Abhängigkeit von einer Position (X_{S}) des Bearbeitungskopfs (9) in der ersten Richtung (X) erfolgt.

17. Verfahren nach einem der Ansprüche 15 oder 16, bei dem der Unterstützungsschlitten (13) unter einem freizuschneidenden Werkstückteil (18, 18a, 18b) angeordnet wird.

18. Verfahren nach einem der Ansprüche 15 bis 17, bei dem eine Freischneideposition (FP) entlang einer Schnittkontur eines freizuschneidenden Werkstückteils (18, 18a, 18b) sowie die Position des Unterstützungsschlittens (13) und/oder der Öffnung (26) in der Auflagefläche (14) des Unterstützungsschlittens (13) so gewählt werden, dass beim Freischneiden eine maximale flächige Unterstützung des freizuschneidenden Werkstückteils (18, 18a, 18b) durch die Auflagefläche (14) erfolgt und/oder die Lagestabilität des Werkstückteils (18, 18a, 18b) durch die Auflageelemente oder die Auflagefläche (14) gewährleistet ist.

19. Verfahren nach einem der Ansprüche 15 bis 18, weiter umfassend: Ausschleusen des freigeschnittenen Werkstückteils (18, 18a, 18b) durch Erzeugen einer Relativbewegung zwischen dem freigeschnittenen Werkstückteil (18, 18a, 18b) und dem Unterstützungsschlitten (13).

20. Verfahren nach einem der Ansprüche 15 bis 18 an einer Maschine (1) nach Anspruch 9, weiter umfassend: Ausschleusen des freigeschnittenen Werkstückteils (18, 18a, 18b) durch Schwenken zumindest eines Teilbereichs (28a, 28b) der Auflagefläche (14) oder durch Schwenken des Unterstützungsschlittens (13).

21. Verfahren nach einem der Ansprüche 15 bis 18 an einer Maschine (1) nach Anspruch 9, weiter umfassend:
Ausschleusen des freigeschnittenen Werkstückteils (18, 18a, 18b) durch Absenken des Unterstützungsschlittens in Schwerkraftrichtung (Z), Verfahren des Unterstützungsschlittens in der zweiten Richtung (Y) und anschließendes Erzeugen einer Relativbewegung zwischen dem freigeschnittenen Werkstückteil (18, 18a, 18b) und dem Unterstützungsschlitten (13).

22. Computerprogrammprodukt, welches die Durchführung aller Schritte des Verfahrens nach einem der Ansprüche 15 bis 21 bewirkt, wenn das Computerprogramm auf einer Steuerungseinrichtung einer Maschine nach einem der Ansprüche 1-14 abläuft.

## Claims

1. A machine (1) for the separative machining of a plate-shaped workpiece (2) by means of a processing beam (3), comprising:
a first movement unit (7) for moving the workpiece (2) in a first direction (X);
a second movement unit (11) for moving a machining head (9) which aligns the processing beam (3) onto the workpiece (2) in a second direction (Y) which is perpendicular to the first direction (X); and
two workpiece-bearing faces (4, 5) for bearing the workpiece (2), a gap (6) which extends along the second direction (Y) being formed between the former,
**characterized in**
**that** at least one support slide (13) which is displaceable in the second direction (Y) is disposed within the gap (6), said support slide (13) having a bearing face (14) for supporting the workpiece (2) supported on the workpiece-bearing faces (4, 5) and for supporting workpiece parts (18, 18a, 18b) which are cut in the course of the separative machining, and that the support slide (13) is displaceable in a controlled manner within the gap (6), so as to be independent of the machining head (9).

2. The machine as claimed in claim 1, wherein the support slide (13) is additionally displaceable in a controlled manner in the first direction (X) within the gap (6).

3. The machine as claimed in one of the preceding claims, wherein the machine has an additional third movement unit (12) for moving the machining head (9) in the first direction (X) within the gap (6).

4. The machine as claimed in one of the preceding claims, wherein at least one opening (20, 23) for the passage of the processing beam (3) is disposed in the bearing face (14) of the support slide (13).

5. The machine as claimed in claim 4, wherein a plurality of openings (20, 23) of various size and/or geometry are disposed in the bearing face (14).

6. The machine as claimed in claim 5, wherein at least two of the openings (20, 23) are interconnected.

7. The machine as claimed in one of claims 4 to 6, wherein at least one opening (20) is connected to an external edge (22) of the bearing face (14) of the support slide (13).

8. The machine as claimed in one of the preceding claims, wherein the support slide (13) is displaceable in the second direction (Y) to a parking position (Yp) outside a displacement range of the machining head (9).

9. The machine as claimed in one of the preceding claims, wherein at least one part-region (28a, 28b) of the bearing face (14) of the support slide (13) and/or the support slide (13) *per se* are/is displaceable in the direction of gravity (Z) and/or are/is downwardly pivotable.

10. The machine as claimed in one of the preceding claims, wherein the support slide (13) is displaceable along a discharge flap (25) which is disposed so as to be adjacent to the gap (6), and is conjointly with the discharge flap (25) downwardly pivotable.

11. The machine as claimed in one of the preceding claims, wherein the bearing face (14) of the support slide (13) forms the upper side of a suction box (41) for suctioning residual process materials.

12. The machine as claimed in one of the preceding claims, wherein a small-parts container (42) and/or a parts chute (40) are/is attached to the support slide (13).

13. The machine as claimed in one of the preceding claims, the machine furthermore comprising: a controller unit (15) which is configured to determine the position (Y_{U}, X_{U}) of the support slide (13) in the gap (6) so as to depend on the size, the contour, and/or the thickness of a workpiece part (16, 17, 18, 18a, 18b) to be cut off from the workpiece (2) in the separative machining.

14. The machine as claimed in claim 13, wherein the controller unit (15) is configured to determine the position (X_{U}) of the support slide (13) and/or of the opening (20, 23) of the bearing face (14) in the first direction (X) so as to depend on the position (X_{S}) of the machining head (9) in the first direction (X).

15. A method for the separative machining of a workpiece (2) in a machine (1) as claimed in one of the preceding claims, comprising:
selecting a position (Y_{U}, X_{U}) of the support slide (13) in the gap (6) in dependence of the size, the contour, and/or the thickness of a workpiece part (16, 17, 18, 18a, 18b) to be cut off from the workpiece (2) in the separative machining.

16. The method as claimed in claim 15, wherein selecting a position (X_{U}) of the support slide (13) in the first direction (X), and/or selecting a position of the opening (26) in the bearing face (14) in the first direction (X), is / are performed in dependence on a position (X_{S}) of the machining head (9) in the first direction (X).

17. The method as claimed in one of claims 15 or 16, wherein the support slide (13) is disposed below a workpiece part (18, 18a, 18b) to be cut off.

18. The method as claimed in one of claims 15 to 17, wherein a separating cut position (FP) along a cutting contour of a workpiece part (18, 18a, 18b) to be cut off, and the position of the support slide (13) and/or of the opening (20, 23) in the bearing face (14) of the support slide (13) are chosen such that maximum planar support of the workpiece part (18, 18a, 18b) to be cut off is performed by the bearing face (14), and/or that the positional stability of the workpiece part (18, 18a, 18b) is guaranteed by the bearing elements or the bearing face (14), during the separating cut process.

19. The method as claimed in one of claims 15 to 18, further comprising:
discharging the cut off workpiece part (18, 18a, 18b) by generating relative movement between the cut off workpiece part (18, 18a, 18b) and the support slide (13).

20. The method as claimed in one of claims 15 to 18 in a machine (1) according to claim 9, further comprising:
discharging the cut off workpiece part (18, 18a, 18b) by pivoting at least one part-region (28a, 28b) of the bearing face (14), or by pivoting the support slide (13).

21. The method as claimed in one of claims 15 to 18 in a machine (1) according to claim 9, further comprising:
discharging the cut off workpiece part (18, 18a, 18b) by lowering the support slide in the direction of gravity (Z); displacing the support slide in the second direction (Y), and subsequently generating relative movement between the cut off workpiece part (18, 18a, 18b) and the support slide (13).

22. A computer program product which effects performance of all steps of the method as claimed in one of claims 15 to 21, when the computer program runs on a controller unit of a machine according to one of the claims 1 to 14.

## Revendications

1. Machine (1) affecté à l'usinage séparatif d'une pièce (2) en forme de plaque, au moyen d'un faisceau d'usinage (3), comprenant :
un premier dispositif (7) de mise en mouvement, pour mouvoir la pièce (2) dans une première direction (X),
un deuxième dispositif (11) de mise en mouvement, pour mouvoir une tête d'usinage (9), orientant le faisceau d'usinage (3) vers ladite pièce (2), dans une deuxième direction (Y) perpendiculaire à la première, ainsi que
deux surfaces (4, 5) d'appui de pièces, destinées à procurer un appui à ladite pièce (2) et entre lesquelles est réservé un espace interstitiel (6) s'étendant le long de ladite deuxième direction (Y),
**caractérisée par le fait**
**qu'**au moins un chariot de soutien (13), situé à l'intérieur de l'espace interstitiel (6) et pouvant être déplacé dans la deuxième direction (Y), est muni d'une surface d'appui (14) pour soutenir la pièce (2) reposant sur les surfaces (4, 5) d'appui de pièces, et pour soutenir des parties (18, 18a, 18b) de ladite pièce découpées au cours de l'usinage séparatif; et par le fait que ledit chariot de soutien (13) peut être déplacé de manière commandée, à l'intérieur dudit espace interstitiel (6), indépendamment de la tête d'usinage (9).

2. Machine selon la revendication 1, dans laquelle le chariot de soutien (13) peut être additionnellement déplacé dans la première direction (X), de manière commandée, à l'intérieur de l'espace interstitiel (6).

3. Machine selon l'une des revendications précédentes, munie d'un troisième dispositif additionnel (12) de mise en mouvement, pour mouvoir la tête d'usinage (9) dans la première direction (X) à l'intérieur de l'espace interstitiel (6).

4. Machine selon l'une des revendications précédentes, dans laquelle au moins un orifice (20, 23), affecté au passage du faisceau d'usinage (3), est pratiqué dans la surface d'appui (14) du chariot de soutien (13).

5. Machine selon la revendication 4, dans laquelle plusieurs orifices (20, 23), de tailles et/ou de géométries différentes, sont pratiqués dans la surface d'appui (14).

6. Machine selon la revendication 5, dans laquelle au moins deux, parmi les orifices (20, 23), sont reliés l'un à l'autre.

7. Machine selon l'une des revendications 4 à 6, dans laquelle au moins un orifice (20) est relié à une arête extérieure (22) de la surface d'appui (14) du chariot de soutien (13).

8. Machine selon l'une des revendications précédentes, dans laquelle le chariot de soutien (13) peut être déplacé vers un emplacement de remisage (Y_{P}), à l'extérieur d'une zone de déplacement de la tête d'usinage (9) dans la deuxième direction (Y).

9. Machine selon l'une des revendications précédentes, dans laquelle au moins une région partielle (28a, 28b) de la surface d'appui (14) du chariot de soutien (13), et/ou ledit chariot de soutien (13) proprement dit, peu(ven)t être déplacé(e)(s) dans la direction (Z) de la gravité et/ou animé(e)(s) de pivotements vers le bas.

10. Machine selon l'une des revendications précédentes, dans laquelle le chariot de soutien (13) peut être déplacé le long d'un volet d'évacuation (25) occupant une position voisine de l'espace interstitiel (6), et peut être animé de pivotements vers le bas conjointement audit volet d'évacuation (25).

11. Machine selon l'une des revendications précédentes, dans laquelle la surface d'appui (14) du chariot de soutien (13) matérialise la face supérieure d'un caisson (41) d'élimination par aspiration pour éliminer, par aspiration, des substances résiduelles de processus.

12. Machine selon l'une des revendications précédentes, dans laquelle un conteneur (42) de petites pièces, et/ou une goulotte (40) d'enlèvement de pièces, est (sont) installé(e)(s) sur le chariot de soutien (13).

13. Machine selon l'une des revendications précédentes, comprenant par ailleurs: un dispositif de commande (15) réalisé en vue d'établir fermement l'emplacement (Y_{U}, X_{U}) occupé par le chariot de soutien (13), dans l'espace interstitiel (6), en fonction de la taille, du profil et/ou de l'épaisseur d'une partie (16, 17, 18, 18a, 18b) de la pièce devant être dissociée d'avec ladite pièce (2), par découpe, au cours de l'usinage séparatif.

14. Machine selon la revendication 13, dans laquelle le dispositif de commande (15) est réalisé en vue d'établir l'emplacement (X_{U}) du chariot de soutien (13) et/ou de l'orifice (20, 23) de la surface d'appui (14), dans la première direction (X), en fonction de l'emplacement (Xₛ) de la tête d'usinage (9) dans ladite première direction (X).

15. Procédé d'usinage séparatif d'une pièce (2) sur une machine (1) conforme à l'une des revendications précédentes, consistant à :
sélectionner un emplacement (Y_{U}, X_{U}) occupé par le chariot de soutien (13), dans l'espace interstitiel (6), en fonction de la taille, du profil et/ou de l'épaisseur d'une partie (16, 17, 18, 18a, 18b) de la pièce devant être dissociée d'avec ladite pièce (2), par découpe, au cours de l'usinage séparatif.

16. Procédé selon la revendication 15, dans lequel la sélection d'un emplacement (X_{U}) du chariot de soutien (13) dans la première direction (X), et/ou la sélection d'un emplacement occupé par l'orifice (20, 23) dans la surface d'appui (14), dans ladite première direction (X), s'opère(nt) en fonction d'un emplacement (X_{S}) de la tête d'usinage (9) dans ladite première direction (X).

17. Procédé selon l'une des revendications 15 ou 16, dans lequel le chariot de soutien (13) est mis en place au-dessous d'une partie (18, 18a, 18b) de la pièce devant être dissociée par découpe.

18. Procédé selon l'une des revendications 15 à 17, dans lequel un emplacement (FP) de dissociation par découpe le long d'un profil de sectionnement d'une partie (18, 18a, 18b) de la pièce devant être dissociée par découpe, ainsi que l'emplacement du chariot de soutien (13), et/ou celui occupé par l'orifice (20, 23), dans la surface d'appui (14) dudit chariot de soutien (13), sont sélectionnés de façon telle que, lors de la dissociation par découpe, ladite surface d'appui (14) procure un soutien maximal à plat à ladite partie (18, 18a, 18b) de la pièce, devant être dissociée par découpe, et/ou que la stabilité d'assise de ladite partie (18, 18a, 18b) de ladite pièce soit garantie par les éléments d'appui ou par ladite surface d'appui (14).

19. Procédé selon l'une des revendications 15 à 18, consistant par ailleurs à :
évacuer la partie (18, 18a, 18b) de la pièce, dissociée par découpe, par génération d'un mouvement relatif entre le chariot de soutien (13) et ladite partie (18, 18a, 18b) de la pièce dissociée par découpe.

20. Procédé selon l'une des revendications 15 à 18, mis en oeuvre sur une machine (1) conforme à la revendication 9 et consistant par ailleurs à : évacuer la partie (18, 18a, 18b) de la pièce, dissociée par découpe, par pivotement imprimé à au moins une région partielle (28a, 28b) de la surface d'appui (14) ou par pivotement imprimé au chariot de soutien (13).

21. Procédé selon l'une des revendications 15 à 18, mis en oeuvre sur une machine (1) conforme à la revendication 9 et consistant par ailleurs à :
évacuer la partie (18, 18a, 18b) de la pièce, dissociée par découpe, en abaissant le chariot de soutien dans la direction (Z) de la gravité, en déplaçant ledit chariot de soutien dans la deuxième direction (Y), et en engendrant ensuite un mouvement relatif entre ledit chariot de soutien (13) et ladite partie (18, 18a, 18b) de la pièce dissociée par découpe.

22. Produit de programme informatique provoquant l'exécution de toutes les étapes du procédé conforme à l'une des revendications 15 à 21 lorsque ledit programme informatique se déroule sur un dispositif de commande d'une machine conforme à l'une des revendications 1-14.
